# FASCICULE DE BREVET EUROPEEN

(11) **EP 3 218 631 B1**
(45) Date de publication et mention de la délivrance du brevet: **26.09.2018**
(21) Numéro de dépôt: 15791599.2
(22) Date de dépôt: 09.11.2015
(51) Int. Cl.: F16L 37/56

(54) **DISPOSITIF DE CONNEXION FLUIDIQUE D'UNE LIGNE FLUIDIQUE DOUBLE ENVELOPPE COMPORTANT DES PREMIER ET DEUXIÈME CONNECTEURS FLUIDIQUES**
FLUIDVERBINDUNGSVORRICHTUNG EINER UMMANTELTEN FLUIDLEITUNG MIT ERSTEM UND ZWEITEM FLÜSSIGKEITSVERBINDER
FLUID-CONNECTION DEVICE OF A JACKETED FLUID LINE INCLUDING FIRST AND SECOND FLUID CONNECTORS

(30) Priorité: 12.11.2014 FR 1460886
(43) Date de publication de la demande: 20.09.2017
(73) Titulaire: COMMISSARIAT À L'ÉNERGIE ATOMIQUE ET AUX ÉNERGIES ALTERNATIVES, 75015 Paris (FR)
(72) Inventeur: COLIN, Christian, F-83560 Vinon-sur-Verdon (FR); PIERRE, Jocelyn, F-04220 Sainte-Tulle (FR)
(74) Mandataire: Brevalex
(86) Numéro de dépôt international: PCT/EP2015/076011
(87) Numéro de publication internationale: WO 2016/075060

(56) Documents cités:
- EP-A2- 0 303 989
- GB-A- 1 360 732

## Description

### DOMAINE TECHNIQUE

La présente invention se rapporte au domaine des dispositifs permettant la réalisation d'une connexion fluidique sur une ligne fluidique, par exemple entre deux circuits (ou canalisations) de circulation d'un fluide, gaz ou liquide, et plus particulièrement au domaine de tels dispositifs de connexion fluidique nécessitant une surveillance de la non rupture ou du non percement de la ligne fluidique.

L'invention trouve par exemple une application privilégiée dans les processus nécessitant la mise en place de stratégies de sécurité et/ou de sûreté relatives aux lignes fluidiques de ces processus, et devant garantir l'intégrité, au sens de l'absence de fuite, des lignes fluidiques en continu. Elle trouve en particulier une application dans le secteur des réacteurs nucléaires, et plus particulièrement des réacteurs de recherche, utilisés par exemple pour le développement et la qualification de matériaux et combustibles nucléaires, ainsi que pour la médecine nucléaire, et qui comportent des lignes fluidiques nécessitant un suivi de sûreté.

L'invention propose ainsi un dispositif de connexion fluidique d'une ligne fluidique double enveloppe comportant des premier et deuxième connecteurs fluidiques, une ligne fluidique double enveloppe pour la circulation d'au moins un fluide équipée d'un tel dispositif de connexion fluidique, ainsi qu'un procédé de connexion fluidique associé.

### ÉTAT DE LA TECHNIQUE ANTÉRIEURE

Au préalable, il est à noter que, dans l'ensemble de la description, l'expression « connecteur fluidique », ou plus simplement « connecteur », désigne l'ensemble formé par la fiche et l'embase que constituent les deux éléments d'une connectique. La paire fiche/embase est nécessairement appariée, et peut indifféremment correspondre à une paire femelle/mâle ou mâle/femelle. De plus, l'expression « circuit de circulation », ou plus simplement « circuit », désigne la canalisation qui véhicule un fluide, gaz ou liquide, et l'expression « connectique fluidique », ou plus simplement « connectique », désigne la terminaison de ce circuit. L'expression « circuit connecté » désigne alors l'ensemble formée par la connectique et son circuit.

Enfin, l'expression « fluide procédé », par exemple le gaz procédé, désigne le premier fluide servant à l'alimentation du procédé et qui constitue le fluide à surveiller. L'expression « fluide enveloppe ou de surveillance », par exemple le gaz enveloppe ou de surveillance, désigne le deuxième fluide dont la surveillance d'une anomalie, par exemple un changement de pression, est contrôlée pour détecter toute fuite sur la ligne fluidique.

Dans le domaine général de la connexion fluidique, il existe des systèmes fluidiques conçus pour permettre d'établir une surveillance de sûreté continue de l'état de la ligne fluidique sur laquelle ils sont adaptés. Cette surveillance de sûreté consiste ainsi en la connaissance en continu de la non rupture, ou du non percement, de la ligne fluidique en cours de processus, de façon à éviter tout risque de fuite du fluide contenu dans la ligne fluidique qui pourrait par exemple être dangereuse et dommageable. En effet, le fluide procédé peut être critique, présentant par exemple une dangerosité réputée, notamment une explosivité ou une toxicité, à forts impacts économique et environnemental, ou véhiculant une information importante, par exemple du type surveillance, ce qui impose le contrôle de sûreté en permanence et sa maintenance.

Par exemple, dans le domaine des réacteurs nucléaires, et plus particulièrement des réacteurs de recherche, les lignes fluidiques peuvent être utilisées pour permettre l'alimentation en gaz inertes de dispositifs de ces réacteurs ou la sollicitation d'éléments situés à l'intérieur de ces dispositifs. Certaines de ces lignes fluidiques sont dites de sûreté, ce qui signifie qu'il est nécessaire et obligatoire de contrôler l'étanchéité de ces lignes à chaque instant, autrement dit encore de s'assurer du non percement, y compris au niveau des connecteurs, et donc de l'absence de rupture, des lignes fluidiques et de vérifier l'absence de déconnexion de ces lignes fluidiques, ceci même si une éventuelle déconnexion du circuit procédé n'entraîne pas de fuite sensible du fluide procédé.

En effet, pour des raisons d'exploitation, de telles lignes fluidiques nécessitent la mise en place de connecteurs fluidiques, par exemple du type connecteurs rapides, et la surveillance de sûreté de façon continue des lignes fluidiques est requise aussi bien au niveau des circuits de circulation des gaz inertes qu'au niveau des connecteurs fluidiques.

Afin de contrôler la sécurité des lignes fluidiques, des solutions connues existent déjà pour les parties linéaires des lignes fluidiques (tubes, tuyaux d'alimentation, par exemple), autrement dit pour les circuits de circulation du gaz. Ces solutions consistent généralement en la mise en place de deux tubes concentriques dont l'intérieur du tube interne, de plus faible diamètre, est rempli du gaz procédé. L'espace situé entre les deux tubes concentriques est quant à lui rempli d'un gaz de surveillance, appelé encore gaz enveloppe. Ainsi, en pratique, la surveillance de sûreté du circuit formé des deux tubes concentriques repose sur le contrôle en continu de la pression du gaz enveloppe. En effet, moyennant un ajustement correct de sa pression initiale, une chute de pression du gaz enveloppe correspondrait à un percement du tube interne et/ou du tube externe, et donc à une rupture du circuit de circulation du gaz de la ligne fluidique. Selon la conception du tube externe, celui-ci peut être classé comme enveloppe ou barrière au sens de la sûreté nucléaire.

A titres d'exemples, les demandes de brevet japonais JPS 64-83994 A, JP 2009-168127 A et JP 2007-321885 A, la demande de brevet allemand DE 199 22 106 A1, et les brevets américains US 6,116,817 A et US 5,681,063 A décrivent l'utilisation de connecteurs fluidiques pour tubes à double enveloppe.

La demande de brevet européen EP 0 303 989 A décrit un dispositif de connexion fluidique avec un premier et un deuxième connecteur fluidique et des connectiques fluidiques.

Le recours à l'utilisation d'un gaz de surveillance circulant à l'intérieur d'une enveloppe formée autour du circuit de circulation du gaz procédé permet de répondre au besoin de surveillance du non percement ou de la non rupture de la ligne fluidique au niveau de ses parties linéaires. De plus, cette solution peut permettre de répondre à un certain nombre de contraintes en termes notamment de réduction d'encombrement, de rapidité d'utilisation, de simplicité de mise en oeuvre technique et de diminution des coûts. En outre, le gaz enveloppe peut également jouer un rôle d'isolant thermique pour le gaz procédé, pouvant s'avérer non négligeable dans le fonctionnement global d'un dispositif de réacteur, en particulier expérimental.

Cependant, comme énoncé précédemment, la surveillance continue de la ligne fluidique est également requise au niveau de la discontinuité de celle-ci, c'est-à-dire au niveau des connecteurs fluidiques prévus pour assurer la connexion et la déconnexion des circuits de circulation du gaz. Or, pour ce faire, la solution connue consiste généralement à placer le connecteur fluidique à l'intérieur d'un boîtier métallique. Des tubes sont alors soudés sur le boîtier afin de mettre en place la solution précédemment décrite, consistant à utiliser des tubes concentriques pour permettre la circulation du gaz enveloppe. De plus, pour que le gaz enveloppe parvienne à l'intérieur du boîtier métallique et permette le contrôle de sûreté au niveau du connecteur, un accès (ou encore une « porte ») de circulation pourvu de joints d'étanchéité est formé sur le boîtier, en particulier par fixation à l'aide d'un ensemble de vis. Néanmoins, une telle solution ne s'avère généralement pas satisfaisante car elle présente plusieurs inconvénients. En effet, en plus de l'encombrement qu'elle induit, non acceptable pour bon nombre d'applications des lignes fluidiques, elle requiert également l'utilisation de nombreux outils pour sa mise en oeuvre et un temps conséquent pour permettre une connexion ou une déconnexion de la ligne fluidique (qui nécessite l'enlèvement du boîtier métallique). Aussi, l'exploitation de cette solution est souvent très limitée, compte-tenu des contraintes de maintenance de telles configurations de lignes fluidiques.

### EXPOSÉ DE L'INVENTION

Il existe par conséquent un besoin pour proposer une solution alternative pour permettre une surveillance de sûreté d'une ligne fluidique au niveau de connecteurs fluidiques prévus pour assurer la connexion et la déconnexion de circuits de circulation du fluide. Il existe notamment un besoin pour qu'une telle solution soit de mise en oeuvre rapide, c'est-à-dire qu'elle soit sûre, fiable et facilement exploitable, tout en garantissant l'étanchéité requise pour son usage, par exemple sous eau également.

Il existe également un besoin pour qu'une telle solution présente un faible encombrement pour tenir compte de contraintes d'ergonomie et de miniaturisation globale, en vue d'une simplicité d'exploitation, notamment pour certaines configurations sans outils, et qu'elle permette également une diminution des coûts.

L'invention a pour but de répondre au moins partiellement aux besoins mentionnés ci-dessus et de remédier aux inconvénients relatifs aux réalisations de l'art antérieur.

L'invention a ainsi pour objet, selon la revendication 1, un dispositif de connexion fluidique, destiné à être adapté sur une ligne fluidique double enveloppe pour permettre la connexion et la déconnexion entre un premier circuit de circulation d'au moins un fluide et un deuxième circuit de circulation d'au moins un fluide de la même ligne fluidique,
le premier circuit de circulation comportant un premier circuit interne d'un fluide procédé et un premier circuit externe, formant une enveloppe s'étendant autour du premier circuit interne, d'un fluide de surveillance dont au moins un paramètre est contrôlé pour détecter toute fuite ou rupture de la ligne fluidique, et le deuxième circuit de circulation comportant au moins un deuxième circuit interne du fluide procédé et un deuxième circuit externe du fluide surveillance,
le dispositif de connexion fluidique comportant un premier connecteur fluidique, formé par une connectique fluidique du deuxième circuit interne, notamment une embase, et une connectique fluidique du premier circuit interne, notamment une fiche, pour permettre la connexion et la déconnexion entre le premier circuit interne et le deuxième circuit interne du fluide procédé,
caractérisé en ce qu'il comporte en outre un deuxième connecteur fluidique pour permettre la connexion et la déconnexion entre le premier circuit externe et le deuxième circuit externe de la ligne fluidique, comportant :
- une connectique fluidique, notamment une embase, du deuxième circuit externe dans laquelle est logée au moins partiellement la connectique fluidique du deuxième circuit interne, ladite connectique fluidique du deuxième circuit externe comportant au moins un premier moyen de fixation du type baïonnette, notamment au moins un pion de fixation par baïonnette, sur sa surface extérieure,
- une connectique fluidique, formant notamment une fiche, du premier circuit externe, comportant une pièce de connexion d'enveloppe, montée en translation et en rotation par rapport à une pièce de guidage solidarisée au premier circuit interne, la pièce de connexion d'enveloppe logeant au moins partiellement le premier connecteur fluidique et définissant un volume interne de circulation du fluide de surveillance au niveau du premier connecteur fluidique, la pièce de connexion d'enveloppe comportant en outre au moins un deuxième moyen de fixation du type baïonnette, notamment au moins une encoche de fixation par baïonnette pourvue d'une butée, sur sa surface extérieure, destiné à coopérer avec le premier moyen de fixation du type baïonnette de la connectique fluidique du deuxième circuit externe, notamment par coulissement dudit au moins un pion de fixation par baïonnette dans ladite au moins une encoche de fixation par baïonnette et verrouillage au niveau de la butée, afin d'assurer la connexion et la déconnexion par fixation du type baïonnette entre le premier circuit externe et le deuxième circuit externe de la ligne fluidique.

Par « circuit externe », on entend un circuit de surveillance, et par « circuit interne », on entend un circuit procédé. Un circuit externe et un circuit interne forment ensemble un circuit de circulation.

Grâce à l'invention, il est ainsi possible de mettre en place une solution de surveillance de sûreté d'une ligne fluidique procédé, par utilisation d'un fluide de surveillance circulant à l'intérieur d'une enveloppe du circuit de circulation du fluide procédé, au niveau d'un ou plusieurs connecteurs fluidiques d'une ou plusieurs lignes fluidiques procédé. De plus, de façon avantageuse, l'invention permet la mise en place de deux systèmes de verrouillage (ou de connexion) indépendants l'un de l'autre, à savoir celui spécifique à la circulation du fluide procédé et celui spécifique à la circulation du fluide de surveillance, de sorte que la perte de fonctionnalité de l'un n'entraîne pas la perte instantanée de l'autre, permettant ainsi de réaliser plusieurs actions de mise à l'état sûr du système. En outre, le montage du dispositif de connexion fluidique selon l'invention peut être réalisé de façon rapide, sans recourir à l'utilisation d'outils particuliers.

Le dispositif de connexion fluidique selon l'invention peut en outre comporter l'une ou plusieurs des caractéristiques suivantes prises isolément ou suivant toutes combinaisons techniques possibles.

Les fluides procédé et de surveillance peuvent respectivement être constitués par des liquides ou préférentiellement des gaz procédé et de surveillance.

Ledit au moins un paramètre du fluide de surveillance qui est contrôlé pour détecter un risque de percement ou de rupture de la ligne fluidique peut par exemple être la pression de ce fluide de surveillance. En effet, le premier circuit de circulation comportant le premier circuit interne et le premier circuit externe formant une enveloppe autour du premier circuit interne s'apparente à la solution décrite précédemment de l'art antérieur qui repose sur l'utilisation d'une double enveloppe, autrement dit la mise en place de deux tubes concentriques dont l'intérieur du tube interne (à savoir le premier circuit interne) est rempli de fluide procédé tandis que l'espace situé entre les deux tubes interne et externe (à savoir entre le premier circuit interne et le premier circuit externe) est rempli du fluide de surveillance, dont le contrôle en continu de la pression est effectué afin de détecter une éventuelle chute de pression qui correspondrait à un percement d'au moins un des deux tubes, et donc à une rupture de la ligne fluidique.

En variante, ledit au moins un paramètre du fluide de surveillance qui est contrôlé pour détecter un risque de percement ou de rupture de la ligne fluidique peut être d'un autre type que la pression. Autrement dit, la surveillance de la ligne fluidique peut reposer sur de multiples paramètres de détection, et par exemple sur la détection de la présence de fluide procédé dans le fluide de surveillance, et inversement de la présence de fluide de surveillance dans le fluide procédé. Alternativement, il peut s'agir de la détection d'un changement de débit.

Le premier circuit externe, qui forme l'enveloppe du premier circuit de circulation et qui permet la surveillance de l'étanchéité du premier circuit interne rempli de fluide procédé, peut intégrer des propriétés propres à sa finalité. En particulier, le premier circuit externe est avantageusement prévu pour être étanche. De plus, il permet préférentiellement de contenir un unique volume de fluide de surveillance dans l'espace situé entre sa surface interne et la surface externe du premier circuit interne. En outre, il peut être prévu pour être de faible encombrement ajouté à celui du premier circuit interne. Enfin, le premier circuit externe peut être prévu pour résister à des conditions d'environnement extérieur sévères, telles que la corrosion, des températures élevées, par exemple jusqu'à 250°C, ou encore des agressions physiques, telles que des chocs.

De plus, une anomalie d'une caractéristique du fluide de surveillance peut aussi révéler une perte d'intégrité de l'enveloppe externe. Il s'agit alors d'un rôle de prévention de l'ensemble de l'installation.

Le premier connecteur fluidique peut être choisi parmi ceux connus de l'art antérieur. En particulier, le premier connecteur fluidique peut être un raccord fluidique rapide, en particulier un raccord auto-obturant rapide. Ainsi, de façon avantageuse, le connecteur fluidique peut permettre un gain en termes de verrouillage/déverrouillage rapide entre les premier et deuxième circuits internes, d'encombrement réduit, d'étanchéité et d'ergonomie.

Toutefois, l'utilisation d'un tel connecteur fluidique peut limiter la température du fluide procédé à moins de 300°C du fait de la présence d'un joint d'étanchéité non métallique à l'intérieur du connecteur. De ce fait, il peut aussi être préférable de choisir le premier connecteur fluidique parmi les raccords rapides vissés avec des joints métalliques. De cette façon, il peut être possible d'utiliser des fluides procédé à hautes températures quand bien même l'opérabilité du connecteur peut devenir limitée du fait du recours à l'utilisation d'outils pour assurer la connexion étanche du circuit interne, ainsi que sa déconnexion.

La connectique fluidique du deuxième circuit externe peut par ailleurs avantageusement comporter deux premiers moyens de fixation du type baïonnette, notamment deux pions de fixation par baïonnette, situés par exemple de façon diamétralement opposée sur la surface extérieure de la connectique fluidique du deuxième circuit externe.

De même, la pièce de connexion d'enveloppe peut avantageusement comporter deux deuxièmes moyens de fixation du type baïonnette, notamment deux encoches de fixation par baïonnette pourvue chacune d'une butée pour un pion de fixation par baïonnette, situés par exemple de façon diamétralement opposée sur la surface extérieure de la pièce de connexion d'enveloppe.

Par ailleurs, la pièce de connexion d'enveloppe et la connectique fluidique, notamment l'embase, du deuxième circuit externe forment ensemble une enveloppe de surveillance de la connexion fluidique, permettant notamment la connexion et la déconnexion au droit du premier connecteur fluidique lié au fluide procédé à surveiller. Cette enveloppe, apparentée au deuxième connecteur fluidique, peut également intégrer des propriétés propres à sa finalité. En particulier, elle est avantageusement prévue pour être étanche. De plus, elle permet avantageusement la création du volume interne de circulation du fluide de surveillance au niveau du premier connecteur fluidique. Elle peut également permettre la connexion et la déconnexion rapides entre la pièce de connexion d'enveloppe et la connectique fluidique du deuxième circuit externe, et ce sans l'utilisation d'outillage spécifique. De plus, elle peut être prévue de sorte à ne pas entraver le fonctionnement du premier connecteur fluidique lié au fluide procédé, aussi bien dans une phase de connexion (soit avant la connexion du deuxième connecteur fluidique) que dans une phase de déconnexion (soit après la déconnexion du deuxième connecteur fluidique). Le deuxième connecteur fluidique peut également permettre d'apporter un faible encombrement au niveau du premier connecteur fluidique. En outre, il peut être prévu pour résister à des conditions d'environnement extérieur sévères, telles que la corrosion, des températures élevées, par exemple jusqu'à 250°C, ou encore des agressions physiques, telles que des chocs.

Selon l'invention, la connectique fluidique du premier circuit externe comporte une pièce d'interface destinée à être solidarisée au premier circuit externe du premier circuit de circulation, la pièce d'interface comportant un espace interne pour permettre l'insertion de la pièce de guidage, destinée à s'étendre au moins partiellement à l'intérieur du premier circuit externe et comportant elle-même un espace interne pour le passage du premier circuit interne du premier circuit de circulation.

La pièce d'interface peut comporter une ou plusieurs rainures destinées à prendre appui sur la surface extérieure du premier circuit externe du premier circuit de circulation pour en faciliter la solidarisation étanche.

La pièce de guidage peut en particulier être fixée à la pièce d'interface, notamment dans l'espace interne de la pièce d'interface, et notamment par vissage de la pièce de guidage dans l'espace interne de la pièce d'interface.

La pièce d'interface peut comporter au moins un orifice de circulation du fluide de surveillance.

Ledit au moins un orifice de circulation du fluide de surveillance formé dans la pièce d'interface peut par exemple être formé par un canal permettant une communication fluidique entre le premier circuit externe du premier circuit de circulation et la pièce compressible décrite ci-après.

La connectique fluidique du premier circuit externe de circulation peut en outre comporter une pièce compressible, notamment une pièce formant soufflet, solidarisée de façon étanche à la pièce d'interface et à la pièce de connexion d'enveloppe de sorte à s'étendre autour de parties de la pièce d'interface, de la pièce de guidage et de la pièce de connexion d'enveloppe, la pièce compressible comportant un espace interne de circulation du fluide de surveillance.

La pièce de guidage, autour de laquelle est positionnée la pièce compressible, peut ainsi servir de guide à la pièce compressible. En particulier, lorsque la pièce compressible se présente sous la forme d'une pièce formant soufflet, la pièce de guidage peut permettre d'éviter un flambage du soufflet qui empêcherait sa fonction de compression, notamment pour le déplacement de la pièce de connexion d'enveloppe, comme indiqué ci-après.

La pièce compressible peut être fixée de façon étanche à la pièce d'interface et/ou à la pièce de connexion d'enveloppe, notamment par soudure ou encore plus préférentiellement par vissage. La conception par vissage peut en particulier présenter l'avantage de pouvoir intervenir sur la pièce compressible directement, si besoin.

La pièce compressible peut en particulier être configurée pour pouvoir se compresser et s'étendre le long et autour de l'axe longitudinal du dispositif de connexion fluidique de sorte à permettre le mouvement de translation et de rotation de la pièce de connexion d'enveloppe afin d'assurer la connexion et la déconnexion par fixation du type baïonnette entre le premier circuit externe et le deuxième circuit externe de la ligne fluidique.

Le déplacement en translation de la pièce de connexion d'enveloppe par l'intermédiaire de la pièce compressible peut également permettre d'accéder au premier connecteur fluidique afin d'assurer le verrouillage/déverrouillage de la connexion entre le premier circuit interne et le deuxième circuit interne.

La connectique fluidique du premier circuit externe peut en outre comporter une première pièce d'adaptation, notamment une première bague d'adaptation, disposée autour d'une partie de la pièce d'interface et permettant le maintien hermétique de la pièce compressible sur la pièce d'interface.

La connectique fluidique du premier circuit externe peut par ailleurs comporter une deuxième pièce d'adaptation, notamment une deuxième bague d'adaptation, disposée autour d'une partie de la pièce de connexion d'enveloppe et permettant le maintien hermétique de la pièce compressible sur la pièce de connexion d'enveloppe.

La pièce de connexion d'enveloppe peut également comporter au moins un orifice de circulation du fluide de surveillance.

Ledit au moins un orifice de circulation du fluide de surveillance formé dans la pièce de connexion d'enveloppe peut par exemple être formé par un canal permettant une communication fluidique entre la pièce compressible et le volume interne de circulation du fluide de surveillance au niveau du premier connecteur fluidique.

La connectique fluidique du premier circuit externe peut en outre comporter au moins un organe de rappel élastique, notamment un ressort (en compression), disposé autour de la pièce de guidage au niveau de la pièce de connexion d'enveloppe et configuré pour exercer un rappel élastique en translation de la pièce de connexion d'enveloppe afin d'assurer son verrouillage, autrement dit son maintien en fermeture, lors de sa connexion par fixation du type baïonnette entre le premier circuit de circulation et le deuxième circuit de circulation de la ligne fluidique.

En particulier, l'organe de rappel élastique peut être configuré pour maintenir dans son état de repos, notamment son état compressé, la pièce de connexion d'enveloppe à proximité du premier circuit externe. De cette façon, il peut être possible d'accéder au premier connecteur fluidique en l'absence de verrouillage (ou de fixation) entre les premier et deuxième moyens de fixation du type baïonnette, et de maintenir le verrouillage des premier et deuxième circuits externes ensemble par le biais de la coopération entre les premier et deuxième moyens de fixation du type baïonnette, en particulier après avoir effectué un mouvement de translation dans un sens, puis un mouvement de rotation, puis un nouveau mouvement de translation dans l'autre sens, en particulier pour permettre le maintien en place d'un pion de fixation par baïonnette dans la butée d'une encoche de fixation par baïonnette.

De façon avantageuse, l'utilisation d'un tel organe de rappel élastique peut permettre de minimiser l'encombrement du dispositif de connexion fluidique, notamment l'encombrement diamétral du dispositif.

Le dispositif de connexion fluidique selon l'invention peut par ailleurs comporter au moins un premier joint d'étanchéité disposé autour de la connectique fluidique du deuxième circuit externe de sorte à assurer l'étanchéité entre ladite connectique fluidique et la pièce de connexion d'enveloppe.

Ledit au moins un joint d'étanchéité peut notamment être formé par un joint torique. De façon avantageuse, ledit au moins un joint d'étanchéité peut également être facilement interchangeable.

La connectique fluidique du deuxième circuit externe peut également comporter, notamment à son extrémité opposée à la connectique fluidique du premier circuit interne, des moyens de raccordement étanche à un dispositif cible destiné à être alimenté en fluide procédé, notamment au moins un deuxième joint d'étanchéité et un contre-écrou.

Bien entendu, d'autres modes de fixation peuvent être envisagés entre le deuxième circuit externe et un dispositif cible destiné à être alimenté en fluide procédé, par exemple la soudure.

Le système de fixation du premier connecteur fluidique et le système de fixation du type baïonnette du deuxième connecteur fluidique sont en outre avantageusement indépendants l'un de l'autre.

Aussi, de façon privilégiée, la perte de fonctionnalité de l'un n'implique pas la perte immédiate de fonctionnalité de l'autre. Contrairement à certaines solutions de l'art antérieur reposant sur un système de verrouillage unique, la rupture du système n'entraîne pas la déconnexion immédiate de l'ensemble du système.

Le dispositif de connexion fluidique selon l'invention peut encore comporter un système de détrompage au niveau de la fixation du type baïonnette du deuxième connecteur fluidique.

Un tel système de détrompage peut par exemple être constitué par un dispositif mécanique, reposant par exemple sur l'utilisation d'angles différents ou de de tailles différentes des pions baïonnettes, pour éviter des erreurs d'assemblage de la ligne fluidique. En particulier, le système de détrompage peut permettre d'éviter une interversion entre des circuits de circulation lors d'opérations de connexion de plusieurs lignes fluidiques.

En outre, l'invention a également pour objet, selon un autre de ses aspects, une ligne fluidique double enveloppe pour la circulation d'au moins un fluide, comportant :
- un premier circuit de circulation d'au moins un fluide, le premier circuit de circulation comportant un premier circuit interne d'un fluide procédé et un premier circuit externe, formant une enveloppe s'étendant autour du premier circuit interne, d'un fluide de surveillance dont au moins un paramètre est contrôlé pour détecter un risque de rupture de la ligne fluidique,
- un deuxième circuit de circulation d'au moins un fluide, le deuxième circuit de circulation comportant au moins un deuxième circuit interne du fluide procédé et un deuxième circuit externe du fluide de surveillance,
caractérisée en ce qu'elle est équipée d'un dispositif de connexion fluidique tel que défini précédemment, pour permettre la connexion et la déconnexion entre le premier circuit externe et le deuxième circuit externe.

Par ailleurs, l'invention a encore pour objet, selon un autre de ses aspects, un procédé de connexion fluidique entre un premier circuit externe et un deuxième circuit externe d'une ligne fluidique au moyen d'un dispositif de connexion fluidique tel que défini précédemment, caractérisé en ce qu'il comporte au moins une étape consistant à déplacer la pièce de connexion d'enveloppe en translation et en rotation, le long et autour de l'axe longitudinal du dispositif de connexion fluidique, par rapport à la connectique fluidique du deuxième circuit externe afin d'assurer le verrouillage et/ou le déverrouillage du deuxième connecteur fluidique par le biais de la coopération entre les premier et deuxième moyens de fixation du type baïonnette.

Selon un mode de réalisation, ladite au moins une étape de verrouillage et/ou déverrouillage, préférentiellement de verrouillage, du deuxième connecteur fluidique peut impliquer l'étape de verrouillage et/ou de déverrouillage, préférentiellement de verrouillage, du premier connecteur fluidique. En particulier, dans le cas de l'utilisation de connecteurs à verrouillage rapide pour le premier connecteur fluidique, la connexion de la pièce de connexion d'enveloppe sur les premier et deuxième moyens de fixation du type baïonnette peut impliquer en même temps la connexion et le verrouillage du premier connecteur fluidique (circuit procédé), tout en conservant l'indépendance de la déconnexion des deux connecteurs fluidiques, autrement dit des deux circuits procédé et de surveillance.

De façon avantageuse, cette ou ces étapes du procédé selon l'invention peuvent être réalisées sans l'utilisation d'un outillage spécifique.

Le dispositif de connexion fluidique, la ligne fluidique et le procédé selon l'invention peuvent comporter l'une quelconque des caractéristiques énoncées dans la présente description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1 représente un exemple de ligne fluidique comportant un dispositif de connexion fluidique conforme à l'invention dans une configuration intermédiaire entre les positions de verrouillage et de déverrouillage du deuxième connecteur fluidique formant enveloppe, et
- la figure 2 représente, en coupe axiale, la ligne fluidique de la figure 1 comportant le dispositif de connexion fluidique conforme à l'invention, après rotation de 90° autour de l'axe longitudinal du dispositif de connexion fluidique confondu avec l'axe longitudinal de la ligne fluidique.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

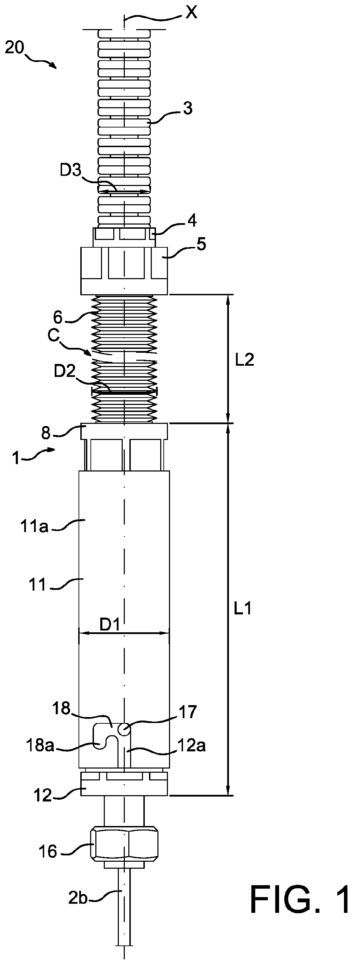

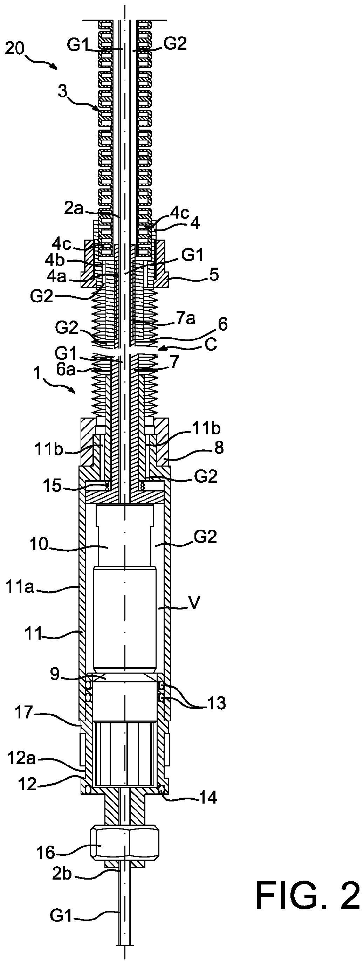

En référence aux figures 1 et 2 est représenté un exemple de réalisation d'une ligne fluidique 20 pour la circulation d'un fluide procédé G1 et d'un fluide de surveillance G2, la ligne fluidique 20 étant équipée d'un dispositif 1 de connexion fluidique conforme à l'invention.

Plus précisément, la figure 1 représente la ligne fluidique 20 dans une configuration intermédiaire du dispositif 1 de connexion fluidique entre les positions de verrouillage et de déverrouillage du deuxième connecteur fluidique du dispositif 1. La figure 2 représente quant à elle, en coupe axiale, la ligne fluidique 20 de la figure 1 après une rotation de 90° autour de l'axe longitudinal X du dispositif 1 de connexion fluidique qui est confondu avec l'axe longitudinal X de la ligne fluidique 20.

Par ailleurs, il est à noter que, sur les figures 1 et 2, la longueur totale de la pièce compressible 6 située entre les première 5 et deuxième 8 bagues d'adaptation, décrites par la suite, n'a pas été représentée par souci de simplicité, ce qui est signifié par les zones de coupure C. De plus, les proportions relatives des différentes pièces sur la figure 2 n'étant pas nécessairement respectées, il est également à noter que le diamètre de la pièce de guidage 7, décrite par la suite, peut être ou non de dimension variable depuis la pièce d'interface 4 vers la pièce de connexion d'enveloppe 11, décrites dans ce qui suit.

La ligne fluidique 20, équipée du dispositif 1 de connexion fluidique selon l'invention, assure dans son ensemble une fonction de double circuit connecté relative par exemple à un dispositif cible (non représenté) destiné à être alimenté en fluide procédé G1.

Comme le montre la figure 2, la ligne fluidique 20 comporte un premier circuit de circulation 2a, 3 de deux fluides G1, G2, notamment des gaz, lequel comporte plus précisément un premier circuit interne 2a de circulation d'un gaz procédé G1 et un premier circuit externe 3, formant une enveloppe s'étendant autour du premier circuit interne 2a, de circulation d'un fluide de surveillance G2 dont au moins un paramètre, par exemple la pression, est contrôlé pour détecter une fuite ou une rupture de la ligne fluidique 20, comme expliqué précédemment dans la partie relative à l'état de la technique antérieure.

Le premier circuit interne 2a et premier circuit externe 3 peuvent en particulier être formés par des tubes concentriques. Le premier circuit interne 2a peut par exemple provenir d'une installation au sol qui l'alimente en gaz procédé G1. Le premier circuit externe 3 peut par exemple être constitué par un tube métallique flexible onduleux, comme représenté. Le premier circuit externe 3 peut par exemple présenter un diamètre externe D3 compris entre 10 et 15 mm, et par exemple de l'ordre de 13 mm. Il peut être de diamètre externe D3 plus grand, par exemple de 31 mm.

Par ailleurs, la ligne fluidique 20 comporte également un deuxième circuit de circulation 2b comportant un deuxième circuit interne 2b de circulation du gaz procédé G1.

Le dispositif 1 de connexion fluidique est alors adapté entre les premier circuit de circulation 2a, 3 et deuxième circuit de circulation 2b pour permettre la connexion et la déconnexion de ceux-ci.

Ce dispositif 1 de connexion fluidique selon l'invention se compose d'un premier et d'un deuxième connecteurs fluidiques qui forment ensemble la double enveloppe étanche au niveau de la connexion fluidique de la ligne fluidique 20.

Tout d'abord, le dispositif 1 de connexion fluidique comporte un premier connecteur fluidique 9, 10, qui est formé par une connectique fluidique 9 du deuxième circuit interne 2b, notamment une embase 9, et une connectique fluidique 10 du premier circuit interne 2a, notamment une fiche 10, pour permettre la connexion et la déconnexion entre le premier circuit interne 2a et le deuxième circuit interne 2b de circulation du gaz procédé G1. Les liaisons entre le premier circuit interne 2a et la fiche 10 d'une part, et entre le deuxième circuit interne 2b et l'embase 9 d'autre part, sont prévues pour être étanches. Elles sont ainsi par exemple du type soudées.

Ce premier connecteur fluidique 9, 10 peut être de type connu, et par exemple choisi parmi ceux commercialisés par les sociétés Stäubli ou Swagelok.

En outre, conformément à l'invention, le dispositif 1 de connexion fluidique comporte également un deuxième connecteur fluidique 4, 5, 6, 7, 8, 11, 12 pour permettre la connexion et la déconnexion entre le premier externe 3 et le deuxième circuit externe (non référencé) du deuxième circuit de circulation de la ligne fluidique 20.

Ce deuxième connecteur fluidique 4, 5, 6, 7, 8, 11, 12 s'apparente à l'enveloppe de surveillance formée autour du premier connecteur fluidique 9, 10 pour le suivi en continu de la sûreté du gaz procédé G1 y compris au niveau de la connexion de la ligne fluidique 20.

Le deuxième connecteur fluidique 4, 5, 6, 7, 8, 11, 12 comporte ainsi une connectique fluidique 12, notamment une embase 12, du deuxième circuit externe dans laquelle est logée l'embase 9 du deuxième circuit interne 2b. Suivant les configurations ou stratégies de surveillance, le deuxième circuit externe peut-être lié de manière hermétique à l'embase 12.

L'embase 12 constitue l'interface entre le dispositif cible du gaz procédé G1, l'embase 9 et la pièce de connexion d'enveloppe 11 décrite ci-après.

L'embase 12 comporte par ailleurs avantageusement deux pions de fixation par baïonnette 17 sur sa surface extérieure 12a, diamétralement opposés.

En outre, le deuxième connecteur fluidique 4, 5, 6, 7, 8, 11, 12 comporte aussi une connectique fluidique 4, 5, 6, 7, 8, 11, formant une fiche, du premier circuit externe 3.

Cette fiche 4, 5, 6, 7, 8, 11 du premier circuit externe 3 comporte une pièce de connexion d'enveloppe 11, appelée cloche 11, qui est montée en translation et en rotation, le long et autour de l'axe longitudinal X de la ligne fluidique 20, par rapport à une pièce de guidage 7 solidarisée au premier circuit externe 3.

La cloche 11 présente par exemple un diamètre externe D1 compris entre 20 et 25 mm, et par exemple de l'ordre de 23 mm. Il peut être de diamètre externe D1 plus grand, par exemple de 31 mm.

La cloche 11 loge au moins partiellement le premier connecteur fluidique 9, 10 et définit par ailleurs un volume interne V de circulation du gaz de surveillance G2 au niveau du premier connecteur fluidique 9, 10.

De plus, la cloche 11 comporte également deux encoches de fixation par baïonnette 18 pourvues chacune d'une butée 18a, comme représenté sur la figure 1, sur sa surface extérieure.

De façon avantageuse, les deux encoches de fixation par baïonnette 18 permettent de coopérer avec les deux pions de fixation du type baïonnette 17 de l'embase 12 afin d'assurer la connexion et la déconnexion par fixation du type baïonnette entre le premier circuit de circulation 2a, 3 et le deuxième circuit de circulation 2b de la ligne fluidique 20. Plus précisément, la fixation par baïonnette est réalisée par coulissement des pions de fixation par baïonnette 17 dans les encoches de fixation par baïonnette 18, lesquelles sont formées par des découpes en forme de « L », ce coulissement impliquant une opération classique d'ouverture ou de fermeture d'un système de fixation par baïonnette consistant en une descente, une rotation et une montée de la cloche 11 par rapport à l'embase 12. Le verrouillage est effectué lorsque les pions de fixation par baïonnette 17 sont contre les butées 18a des encoches de fixation par baïonnette 18.

On va maintenant détailler davantage les éléments qui composent la connectique fluidique 4, 5, 6, 7, 8, 11 du premier circuit de circulation 2a, 3.

Celle-ci comporte en outre une pièce d'interface 4 solidarisée au premier circuit externe 3 du premier circuit de circulation 2a, 3. La pièce d'interface 4 comporte un espace interne 4a pour permettre l'insertion de la pièce de guidage 7 qui s'étend partiellement à l'intérieur du premier circuit externe 3 et qui comporte elle-même un espace interne 7a pour le passage du premier circuit interne 2a.

La pièce d'interface 4 comporte également des rainures 4c qui prennent appui sur la surface extérieure du premier circuit externe 3 pour en faciliter la fixation étanche. De plus, la pièce de guidage 7 est fixée à la pièce d'interface 4 par vissage de celle-ci dans l'espace interne 4a de la pièce d'interface 4.

La pièce d'interface 4 comporte par ailleurs une pluralité de canaux 4b de circulation du gaz de surveillance G2, par exemple des perçages réalisés dans la pièce d'interface 4, qui permettent une communication fluidique entre le premier circuit externe 3 et la pièce compressible 6 décrite ci-après.

Ainsi, en plus d'une fonction de liaison entre la pièce compressible 6 et le premier circuit externe 3, la pièce d'interface 4 assure la continuité des volumes de gaz de surveillance G2 par l'intermédiaire des canaux 4b qui mettent en communication fluidique le volume de gaz de surveillance G2 compris entre le premier circuit externe 3 et le premier circuit interne 2a, et le volume de gaz de surveillance G2 compris entre la pièce compressible 6 et la continuité du premier circuit interne 2a. Il en va de même pour les canaux 11b de circulation du gaz de surveillance G2, décrits par la suite, de la cloche 11 qui mettent en communication fluidique le volume de gaz de surveillance G2 de la cloche 11 avec celui contenu dans la pièce compressible 6.

Par ailleurs, la connectique fluidique 4, 5, 6, 7, 8, 11 du premier circuit de circulation 2a, 3 comporte donc une pièce compressible 6, notamment un soufflet 6, qui est solidarisée à la pièce d'interface 4 et à la cloche 11 de sorte à s'étendre autour d'une partie de la pièce d'interface 4, de la pièce de guidage 7 et de la cloche 11. De plus le soufflet 6 comporte un espace interne 6a de circulation du gaz de surveillance G2.

Le soufflet 6 présente par exemple un diamètre externe D2 compris entre 12 et 20 mm, et par exemple de l'ordre de 16 mm, et une longueur L2 comprise par exemple entre 100 et 200 mm, et par exemple de l'ordre de 160 mm.

La pièce de guidage 7, autour de laquelle est positionnée le soufflet 6, lui sert ainsi de guide afin d'éviter un flambage du soufflet 6 qui empêcherait sa fonction de compression.

Le soufflet 6 est par ailleurs fixé à la pièce d'interface 4 et à la cloche 11 par soudure dans le cadre d'une exploitation réduite du dispositif 1 selon l'invention, sachant qu'une fixation par vissage présente l'avantage de pouvoir intervenir sur le soufflet 6 en cas de besoin.

Le soufflet 6 est de plus configuré pour pouvoir se compresser et s'étendre le long et autour de l'axe longitudinal X du dispositif 1 de connexion fluidique de sorte à permettre le mouvement de translation et de rotation de la cloche 11 afin d'assurer la connexion et la déconnexion par fixation du type baïonnette entre le premier circuit de circulation 2a, 3 et le deuxième circuit de circulation 2b. Le soufflet 6 permet ainsi avantageusement de soulever la cloche 11 jusqu'à atteindre le premier connecteur fluidique 9, 10 pour en permettre le déverrouillage, par le biais d'un bouton par exemple, en ayant au préalable libéré le verrouillage par fixation du type baïonnette de la cloche 11.

Par ailleurs, la connectique fluidique 4, 5, 6, 7, 8, 11 du premier circuit de circulation 2a, 3 comporte aussi une première bague d'adaptation 5, qui est disposée autour d'une partie de la pièce d'interface 4 et permet le maintien hermétique du soufflet 6 sur la pièce d'interface 4. De même, une deuxième bague d'adaptation 8 est disposée autour de la cloche 11 et permet le maintien hermétique du soufflet 6 sur la cloche 11.

La longueur totale L1 depuis la deuxième bague d'adaptation 8 jusqu'à l'embase 12, comme représentée sur la figure 1, peut par exemple être comprise entre 90 et 105 mm, et par exemple être de l'ordre de 100 mm.

Par ailleurs, comme indiqué précédemment, la cloche 11 comporte une pluralité de canaux 11b de circulation du gaz de surveillance G2, de façon à permettre une communication fluidique entre le soufflet 6 et le volume interne V de circulation du gaz de surveillance G2 au niveau du premier connecteur fluidique 9, 10.

Par ailleurs, dans cet exemple de réalisation et de façon nullement limitative, la connectique fluidique 4, 5, 6, 7, 8, 11 du premier circuit de circulation 2a, 3 comporte un ressort 15, permettant de faciliter le verrouillage, disposé autour de la pièce de guidage 7 au niveau de la cloche 11. Ce ressort 15 est configuré pour exercer un rappel élastique en translation de la cloche 11 afin d'assurer la connexion et la déconnexion par fixation du type baïonnette entre le premier circuit de circulation 2a, 3 et le deuxième circuit de circulation 2b. En particulier, en considérant l'orientation du dispositif 1 de connexion fluidique sur la figure 2, le ressort 15 permet de maintenir la cloche 11 en position haute, et donc de pouvoir verrouiller le deuxième connecteur fluidique.

En outre, pour pouvoir assurer l'étanchéité entre l'embase 12 et la cloche 11, le dispositif 1 de connexion fluidique comporte encore deux joints d'étanchéité toriques 13 disposés autour de l'embase 12. La connexion de la cloche 11 sur l'embase 12 par la fixation du type baïonnette et étanche par les joints 13 permet de fermer le circuit du fluide de surveillance G2.

De même, l'embase 12 comporte, au niveau de son extrémité opposée à la fiche 10, des moyens de raccordement étanche au dispositif cible destiné à être alimenté en gaz procédé G1. Ces moyens de raccordement comportent par exemple un trou taraudé, un joint d'étanchéité 14 et un contre-écrou 16, destinés à assurer la liaison étanche avec la tête du dispositif cible.

La connexion et la déconnexion fluidique entre le premier circuit de circulation 2a, 3 et le deuxième circuit de circulation 2b de la ligne fluidique 20 au moyen du dispositif 1 de connexion fluidique peuvent alors être réalisées par déplacement de la cloche 11 en translation (de haut en bas, ou l'inverse, en référence à la figure 2) et en rotation, le long et autour de l'axe longitudinal X du dispositif 1, par rapport à l'embase 12en faisant coopérer les pions de fixation du type baïonnette 17 avec les encoches de fixation du type baïonnette 18.

L'invention parvient ainsi à réaliser un dispositif 1 de connexion fluidique rapide à l'aide d'une double enveloppe étanche qui permet de s'assurer du contrôle permanent de la sûreté de la ligne fluidique 20, du fluide procédé G1. En particulier, le doublage de la ligne fluidique 20 par l'enveloppe 3 peut permettre la surveillance de celle-ci, tandis que le dispositif 1 de connexion fluidique peut permettre de rendre la ligne fluidique 20 déconnectable en vue de sa maintenance, sans outillage spécifique. De plus, le dispositif 1 de connexion fluidique selon l'invention peut permettre la mise en place du deuxième connecteur fluidique 4, 5, 6, 7, 8, 11, 12 de façon simplifiée autour du premier connecteur fluidique 9, 10, pouvant être standard ou préexistant, comme indiqué précédemment. De cette façon, le dispositif 1 de connexion fluidique selon l'invention peut tirer avantage des choix spécifiques faits pour le premier connecteur fluidique 9, 10, notamment en termes de verrouillage, d'ergonomie et de propreté.

Par ailleurs, il est à noter que de façon avantageuse les premier et deuxième connecteurs fluidiques peuvent permettre la connexion et la déconnexion des circuits respectifs qu'ils relient de façon totalement indépendante. Autrement dit, le verrouillage par fixation du type baïonnette du deuxième connecteur fluidique est indépendant du verrouillage propre, en général classique, du premier connecteur fluidique. Autrement dit encore, la perte de fonctionnalité de l'un n'implique avantageusement pas la perte immédiate de fonctionnalité de l'autre.

L'invention peut trouver des applications pour de nombreux types de circuits connectés de fluides industriels. De plus, moyennant un renforcement suffisant de la connectique fluidique du premier circuit de circulation 2a, 3, et notamment de la pièce compressible 6, il peut être possible de qualifier de seconde barrière au sens de la sûreté nucléaire le circuit connecté externe de circulation du fluide de surveillance G2.

Bien entendu, l'invention n'est pas limitée à l'exemple de réalisation qui vient d'être décrit. Diverses modifications peuvent y être apportées par l'homme du métier.

L'expression « comportant un » doit être comprise comme étant synonyme de « comportant au moins un », sauf si le contraire est spécifié.

## Revendications

1. Dispositif (1) de connexion fluidique, destiné à être adapté sur une ligne fluidique double enveloppe (20) pour permettre la connexion et la déconnexion entre un premier circuit de circulation (2a, 3) d'au moins un fluide (G1, G2) et un deuxième circuit de circulation (2b) d'au moins un fluide (G1) de la même ligne fluidique (20),
le premier circuit de circulation (2a, 3) comportant un premier circuit interne (2a) d'un fluide procédé (G1) et un premier circuit externe (3), formant une enveloppe s'étendant autour du premier circuit interne (2a), d'un fluide de surveillance (G2) dont au moins un paramètre est contrôlé pour détecter toute fuite ou rupture de la ligne fluidique (20), et le deuxième circuit de circulation (2b) comportant au moins un deuxième circuit interne (2b) du fluide procédé (G1) et un deuxième circuit externe du fluide de surveillance (G2), le dispositif (1) de connexion fluidique comportant un premier connecteur fluidique (9, 10), formé par une connectique fluidique (9) du deuxième circuit interne (2b) et une connectique fluidique (10) du premier circuit interne (2a) pour permettre la connexion et la déconnexion entre le premier circuit interne (2a) et le deuxième circuit interne (2b) du fluide procédé (G1), le dispositif (1) comportant en outre un deuxième connecteur fluidique (12, 4, 5, 6, 7, 8, 11) pour permettre la connexion et la déconnexion entre le premier circuit externe (3) et le deuxième circuit externe de la ligne fluidique (20), comportant :
- une connectique fluidique (12) du deuxième circuit externe dans laquelle est logée au moins partiellement la connectique fluidique (9) du deuxième circuit interne (2b), ladite connectique fluidique (12) du deuxième circuit externe comportant au moins un premier moyen de fixation du type baïonnette (17), notamment au moins un pion de fixation par baïonnette (17), sur sa surface extérieure (12a),
- une connectique fluidique (4, 5, 6, 7, 8, 11) du premier circuit externe (3), comportant une pièce de connexion d'enveloppe (11), montée en translation et en rotation par rapport à une pièce de guidage (7) solidarisée au premier circuit interne (2a), la pièce de connexion d'enveloppe (11) logeant au moins partiellement le premier connecteur fluidique (9, 10) et définissant un volume interne (V) de circulation du fluide de surveillance (G2) au niveau du premier connecteur fluidique (9, 10), la pièce de connexion d'enveloppe (11) comportant en outre au moins un deuxième moyen de fixation du type baïonnette (18), notamment au moins une encoche de fixation par baïonnette (18) pourvue d'une butée (18a), sur sa surface extérieure (11a), destiné à coopérer avec le premier moyen de fixation du type baïonnette (17) de la connectique fluidique (12) du deuxième circuit externe, notamment par coulissement dudit au moins un pion de fixation par baïonnette (17) dans ladite au moins une encoche de fixation par baïonnette (18) et verrouillage au niveau de la butée (18a), afin d'assurer la connexion et la déconnexion par fixation du type baïonnette entre le premier circuit externe (3) et le deuxième circuit externe de la ligne fluidique (20),
**caractérisé en ce que** la connectique fluidique (4, 5, 6, 7, 8, 11) du premier circuit externe (3) comporte en outre une pièce d'interface (4) destinée à être solidarisée au premier circuit externe (3) du premier circuit de circulation (2a, 3), la pièce d'interface (4) comportant un espace interne (4a) pour permettre l'insertion de la pièce de guidage (7), la pièce de guidage (7) étant destinée à s'étendre au moins partiellement à l'intérieur du premier circuit externe (3) et comportant elle-même un espace interne (7a) pour le passage du premier circuit interne (2a) du premier circuit de circulation (2a, 3).

2. Dispositif selon la revendication 1, **caractérisé en ce que** la pièce d'interface (4) comporte au moins un orifice (4b) de circulation du fluide de surveillance (G2).

3. Dispositif selon la revendication 1 ou 2, **caractérisé en ce que** la connectique fluidique (4, 5, 6, 7, 8, 11) du premier circuit de circulation (2a, 3) comporte en outre une pièce compressible (6), notamment une pièce formant soufflet (6), solidarisée de façon étanche à la pièce d'interface (4) et à la pièce de connexion d'enveloppe (11) de sorte à s'étendre autour de parties de la pièce d'interface (4), de la pièce de guidage (7) et de la pièce de connexion d'enveloppe (11), la pièce compressible (6) comportant un espace interne (6a) de circulation du fluide de surveillance (G2).

4. Dispositif selon la revendication 3, **caractérisé en ce que** la pièce compressible (6) est configurée pour pouvoir se compresser et s'étendre le long et autour de l'axe longitudinal (X) du dispositif (1) de connexion fluidique de sorte à permettre le mouvement de translation et de rotation de la pièce de connexion d'enveloppe (11) afin d'assurer la connexion et la déconnexion par fixation du type baïonnette entre le premier circuit externe (3) et le deuxième circuit externe de la ligne fluidique (20).

5. Dispositif selon la revendication 3 ou 4, **caractérisé en ce que** la connectique fluidique (4, 5, 6, 7, 8, 11) du premier circuit externe (3) comporte en outre une première pièce d'adaptation (5), notamment une première bague d'adaptation (5), disposée autour d'une partie de la pièce d'interface (4) et permettant le maintien hermétique de la pièce compressible (6) sur la pièce d'interface (4).

6. Dispositif selon l'une des revendications 3 à 5, **caractérisé en ce que** la connectique fluidique (4, 5, 6, 7, 8, 11) du premier circuit externe (3) comporte en outre une deuxième pièce d'adaptation (8), notamment une deuxième bague d'adaptation (8), disposée autour d'une partie de la pièce de connexion d'enveloppe (11) et permettant le maintien hermétique de la pièce compressible (6) sur la pièce de connexion d'enveloppe (11).

7. Dispositif selon l'une quelconque des revendications 3 à 6, **caractérisé en ce que** la pièce de connexion d'enveloppe (11) comporte au moins un orifice (11b) de circulation du fluide de surveillance (G2).

8. Dispositif selon l'une quelconque des revendications précédentes, **caractérisé en ce que** la connectique fluidique (4, 5, 6, 7, 8, 11) du premier circuit externe (3) comporte en outre au moins un organe de rappel élastique (15), notamment un ressort (15), disposé autour de la pièce de guidage (7) au niveau de la pièce de connexion d'enveloppe (11) et configuré pour exercer un rappel élastique en translation de la pièce de connexion d'enveloppe (11) afin d'assurer son verrouillage lors de sa connexion par fixation du type baïonnette entre le premier circuit de circulation (2a, 3) et le deuxième circuit de circulation (2b) de la ligne fluidique (20).

9. Dispositif selon l'une quelconque des revendications précédentes, **caractérisé en ce qu'**il comporte en outre au moins premier joint d'étanchéité (13) disposé autour de la connectique fluidique (12) du deuxième circuit externe de sorte à assurer l'étanchéité entre ladite connectique fluidique (12) et la pièce de connexion d'enveloppe (11).

10. Dispositif selon l'une quelconque des revendications précédentes, **caractérisé en ce que** la connectique fluidique (12) du deuxième circuit externe comporte, notamment à son extrémité opposée à la connectique fluidique (10) du premier circuit interne (2a), des moyens de raccordement étanche (14, 16) à un dispositif cible destiné à être alimenté en fluide procédé (G1), notamment au moins un deuxième joint d'étanchéité (14) et un contre-écrou (16).

11. Dispositif selon l'une quelconque des revendications précédentes, **caractérisé en ce que** le système de fixation du premier connecteur fluidique (9, 10) et le système de fixation du type baïonnette du deuxième connecteur fluidique (12, 4, 5, 6, 7, 8, 11) sont indépendants l'un de l'autre.

12. Dispositif selon l'une quelconque des revendications précédentes, **caractérisé en ce qu'**il comporte un système de détrompage au niveau de la fixation du type baïonnette du deuxième connecteur fluidique (12, 4, 5, 6, 7, 8, 11).

13. Ligne fluidique double enveloppe (20) pour la circulation d'au moins un fluide (G1, G2), comportant :
- un premier circuit de circulation (2a, 3) d'au moins un fluide (G1, G2), le premier circuit de circulation (2a, 3) comportant un premier circuit interne (2a) d'un fluide procédé (G1) et un premier circuit externe (3), formant une enveloppe s'étendant autour du premier circuit interne (2a), d'un fluide de surveillance (G2) dont au moins un paramètre est contrôlé pour détecter un risque de rupture de la ligne fluidique (20),
- un deuxième circuit de circulation (2b) d'au moins un fluide (G1), le deuxième circuit de circulation (2b) comportant au moins un deuxième circuit interne (2b) du fluide procédé (G1) et un deuxième circuit externe du fluide de surveillance (G2), **caractérisée en ce qu'**elle est équipée d'un dispositif (1) de connexion fluidique selon l'une quelconque des revendications précédentes, pour permettre la connexion et la déconnexion entre le premier circuit externe (3) et le deuxième circuit externe.

14. Procédé de connexion fluidique entre un premier circuit externe (3) et un deuxième circuit externe d'une ligne fluidique (20) au moyen d'un dispositif (1) de connexion fluidique selon l'une quelconque des revendications 1 à 12, **caractérisé en ce qu'**il comporte au moins une étape consistant à déplacer la pièce de connexion d'enveloppe (11) en translation et en rotation, le long et autour de l'axe longitudinal (X) du dispositif (1) de connexion fluidique, par rapport à la connectique fluidique (12) du deuxième circuit externe afin d'assurer le verrouillage et/ou le déverrouillage du deuxième connecteur fluidique (12, 4, 5, 6, 7, 8, 11) par le biais de la coopération entre les premier (17) et deuxième (18) moyens de fixation du type baïonnette.

15. Procédé selon la revendication 14, caractérisé que ladite au moins une étape de verrouillage et/ou déverrouillage, préférentiellement le verrouillage, du deuxième connecteur fluidique (12, 4, 5, 6, 7, 8, 11) implique l'étape de verrouillage et/ou de déverrouillage, préférentiellement le verrouillage, du premier connecteur fluidique (9, 10).

## Patentansprüche

1. Einrichtung (1) zur Fluidverbindung, die dazu bestimmt ist, an eine Fluidleitung (20) mit doppelter Hülle angepasst zu werden, um die Verbindung und die Trennung zwischen einem ersten Zirkulationskreislauf (2a, 3) für wenigstens ein Fluid (G1, G2) und einem zweiten Zirkulationskreislauf (2b) für wenigstens ein Fluid (G1) der gleichen Fluidleitung (20) zu erlauben,
wobei der erste Zirkulationskreislauf (2a, 3) einen ersten internen Kreislauf (2a) für ein Arbeitsfluid (G1) und einen ersten externen Kreislauf (3) umfasst, der eine Hülle bildet, die sich um den ersten internen Kreislauf (2a) herum erstreckt, für ein Überwachungsfluid (G2), von dem wenigstens ein Parameter überwacht wird, um jedes Leck oder jeden Bruch der Fluidleitung (20) zu erfassen, und wobei der zweite Zirkulationskreislauf (2b) wenigstens einen zweiten internen Kreislauf (2b) für das Arbeitsfluid (G1) und einen zweiten externen Kreislauf für das Überwachungsfluid (G2) umfasst, wobei die Einrichtung (1) zur Fluidverbindung einen ersten Fluidverbinder (9, 10) umfasst, der gebildet ist durch einen Fluid-Anschluss (9) des zweiten internen Kreislaufs (2b) und einen Fluid-Anschluss (10) des ersten internen Kreislaufs (2a), um die Verbindung und die Trennung zwischen dem ersten internen Kreislauf (2a) und dem zweiten internen Kreislauf (2b) für das Arbeitsfluid (G1) zu erlauben,
wobei die Einrichtung (1) weiterhin einen zweiten Fluidverbinder (12, 4, 5, 6, 7, 8, 11) umfasst, um die Verbindung und die Trennung zwischen dem ersten externen Kreislauf (3) und dem zweiten externen Kreislauf der Fluidleitung (20) zu erlauben, umfassend:
- einen Fluid-Anschluss (12) des zweiten externen Kreislaufs, in dem wenigstens teilweise der Fluid-Anschluss (9) des zweiten internen Kreislaufs (2b) aufgenommen ist, wobei der Fluid-Anschluss (12) des zweiten externen Kreislaufs wenigstens ein erstes Befestigungsmittel vom Bajonett-Typ (17) umfasst, insbesondere wenigstens einen Bajonett-Befestigungsstift (17) auf seiner Außenfläche (12a),
- einen Fluid-Anschluss (4, 5, 6, 7, 8, 11) des ersten externen Kreislaufs (3), umfassend ein Hüllen-Verbindungsstück (11), das verschiebbar und drehbar in Bezug auf ein Führungsstück (7) angebracht ist, welches mit dem ersten internen Kreislauf (2a) fest verbunden ist, wobei das Hüllen-Verbindungsstück (11) wenigstens teilweise den ersten Fluidverbinder (9, 10) aufnimmt und ein internes Volumen (V) für die Zirkulation des Überwachungsfluids (G2) auf Höhe des ersten Fluidverbinders (9, 10) definiert, wobei das Hüllen-Verbindungsstück (11) weiterhin wenigstens ein zweites Befestigungsmittel vom Bajonett-Typ (18) umfasst, insbesondere wenigstens eine Bajonett-Befestigungsaufnahme (18), ausgestattet mit einem Anschlag (18a) auf seiner Außenfläche (11a), dazu bestimmt, mit dem ersten Befestigungsmittel vom Bajonett-Typ (17) des Fluid-Anschlusses (12) des zweiten externen Kreislaufs zusammenzuwirken, insbesondere durch Verschieben des wenigstens einen Bajonett-Befestigungsstiftes (17) in der wenigstens einen Bajonett-Befestigungsaufnahme (18) und Verriegelung auf Höhe des Anschlags (18a), um die Verbindung und die Trennung durch eine Befestigung vom Bajonett-Typ zwischen dem ersten externen Kreislauf (3) und dem zweiten externen Kreislauf der Fluidleitung (20) sicherzustellen, **dadurch gekennzeichnet, dass** der Fluid-Anschluss (4, 5, 6, 7, 8,11) des ersten externen Kreislaufs (3) weiterhin ein Schnittstellenstück (4) umfasst, das dazu bestimmt ist, mit dem ersten externen Kreislauf (3) des ersten Zirkulationskreislaufs (2a, 3) fest verbunden zu sein, wobei das Schnittstellenstück (4) einen Innenraum (4a) umfasst, um das Einsetzen des Führungsstücks (7) zu erlauben, wobei das Führungsstück (7) dazu bestimmt ist, sich wenigstens teilweise im Inneren des ersten externen Kreislaufs (3) zu erstrecken und selbst einen Innenraum (7a) umfasst, für den Durchgang des ersten internen Kreislaufs (2a) des ersten Zirkulationskreislaufs (2a, 3).

2. Einrichtung nach Anspruch 1, **dadurch gekennzeichnet, dass** das Schnittstellenstück (4) wenigstens eine Öffnung (4b) für die Zirkulation des Überwachungsfluids (G2) umfasst.

3. Einrichtung nach Anspruch 1 oder 2, **dadurch gekennzeichnet, dass** der Fluid-Anschluss (4, 5, 6, 7, 8, 11) des ersten Zirkulationskreislaufs (2a, 3) weiterhin ein komprimierbares Bauteil (6) umfasst, insbesondere ein Bauteil, welches einen Faltenbalg (6) bildet, das in dichter Weise fest mit dem Schnittstellenstück (4) und mit dem Hüllen-Verbindungsstück (11) verbunden ist, so dass es sich um Bereiche von dem Schnittstellenstück (4), von dem Führungsstück (7) und von dem Hüllen-Verbindungsstück (11) herum erstreckt, wobei das komprimierbare Bauteil (6) einen Innenraum (6a) für die Zirkulation des Überwachungsfluids (G2) umfasst.

4. Einrichtung nach Anspruch 3, **dadurch gekennzeichnet, dass** das komprimierbare Bauteil (6) dazu konfiguriert ist, sich entlang der und um die Längsachse (X) der Einrichtung (1) zur Fluidverbindung herum komprimieren und ausdehnen zu können, so dass die Verschiebe- und Dreh-Bewegung des Hüllen-Verbindungsstücks (11) ermöglicht wird, um die Verbindung und die Trennung durch eine Befestigung vom Bajonett-Typ zwischen dem ersten externen Kreislauf (3) und dem zweiten externen Kreislauf der Fluidleitung (20) sicherzustellen.

5. Einrichtung nach Anspruch 3 oder 4, **dadurch gekennzeichnet, dass** der Fluid-Anschluss (4, 5, 6, 7, 8, 11) des ersten externen Kreislaufs (3) weiterhin ein erstes Adapterstück (5) umfasst, insbesondere einen ersten Adapterring (5) der um einen Bereich des Schnittstellenstücks (4) herum angeordnet ist und ermöglicht, dass das komprimierbare Bauteil (6) hermetisch auf dem Schnittstellenstück (4) gehalten wird.

6. Einrichtung nach einem der Ansprüche 3 bis 5, **dadurch gekennzeichnet, dass** der Fluid-Anschluss (4, 5, 6, 7, 8, 11) des ersten externen Kreislaufs (3) weiterhin ein zweites Adapterstück (8) umfasst, insbesondere einen zweiten Adapterring (8), der um einen Bereich des Hüllen-Verbindungsstücks (11) herum angeordnet ist und ermöglicht, dass das komprimierbare Bauteil (6) hermetisch auf dem Hüllen-Verbindungsstück (11) gehalten wird.

7. Einrichtung nach einem der Ansprüche 3 bis 6, **dadurch gekennzeichnet, dass** das Hüllen-Verbindungsstück (11) wenigstens eine Öffnung (11 B) für die Zirkulation des Überwachungsfluids (G2) umfasst.

8. Einrichtung nach einem der vorhergehenden Ansprüche, **dadurch gekennzeichnet, dass** der Fluid-Anschluss (4, 5, 6, 7, 8, 11) des ersten externen Kreislaufs (3) weiterhin wenigstens ein elastisches Rückstellelement (15) umfasst, insbesondere eine Feder (15), welches um das Führungsstück (7) herum auf Höhe des Hüllen-Verbindungsstücks (11) angeordnet und dazu konfiguriert ist, eine translatorische elastische Rückstellkraft auf das Hüllen-Verbindungsstück (11) auszuüben, um dessen Verriegelung bei seiner Verbindung durch Befestigung vom Bajonett-Typ zwischen dem ersten Zirkulationskreislauf (2a, 3) und dem zweiten Zirkulationskreislauf (2b) der Fluidleitung (20) sicherzustellen.

9. Einrichtung nach einem der vorhergehenden Ansprüche, **dadurch gekennzeichnet, dass** sie weiterhin wenigstens eine erste Dichtung (13) umfasst, die um den Fluid-Anschluss (12) des zweiten externen Kreislaufs herum angeordnet ist, um die Abdichtung zwischen dem Fluid-Anschluss (12) und dem Hüllen-Verbindungsstück (11) sicherzustellen.

10. Einrichtung nach einem der vorhergehenden Ansprüche, **dadurch gekennzeichnet, dass** der Fluid-Anschluss (12) des zweiten externen Kreislaufs insbesondere an seinem Ende, welches dem Fluid-Anschluss (10) des ersten internen Kreislaufs (2a) gegenüberliegt, Mittel zum dichten Anschließen (14, 16) an eine Zieleinrichtung umfasst, die dazu bestimmt ist, mit dem Arbeitsfluid (G1) versorgt zu werden, insbesondere wenigstens eine zweite Dichtung (14) und eine Kontermutter (16)

11. Einrichtung nach einem der vorhergehenden Ansprüche, **dadurch gekennzeichnet, dass** das Befestigungssystem des ersten Fluidverbinders (9, 10) und das Befestigungssystem vom Bajonett-Typ des zweiten Fluidverbinders (12, 4, 5, 6, 7, 8, 11) voneinander unabhängig sind.

12. Einrichtung nach einem der vorhergehenden Ansprüche, **dadurch gekennzeichnet, dass** sie ein Verwechslungsschutzsystem auf Höhe der Befestigung vom Bajonett-Typ des zweiten Fluidverbinders (12, 4, 5, 6, 7, 8, 11) umfasst.

13. Fluidleitung mit doppelter Hülle (20) für die Zirkulation von wenigstens einem Fluid (G1, G2), umfassend:
- einen ersten Zirkulationskreislauf (2a, 3) für wenigstens ein Fluid (G1, G2), wobei der erste Zirkulationskreislauf (2a, 3) einen ersten internen Kreislauf (2a) für ein Arbeitsfluid (G1) und einen ersten externen Kreislauf (3) umfasst, der eine Hülle bildet, welche sich um den ersten internen Kreislauf (2a) herum erstreckt, für ein Überwachungsfluid (G2), von dem wenigstens ein Parameter überwacht wird, um ein Risiko für einen Bruch der Fluidleitung (20) zu erfassen,
- einen zweiten Zirkulationskreislauf (2b) für wenigstens ein Fluid (G1), wobei der zweite Zirkulationskreislauf (2b) wenigstens einen zweiten internen Kreislauf (2b) für das Arbeitsfluid (G1) und einen zweiten externen Kreislauf für das Überwachungsfluid (G2) umfasst, **dadurch gekennzeichnet, dass** sie mit einer Einrichtung (1) zur Fluidverbindung nach einem der vorhergehenden Ansprüche ausgestattet ist, um die Verbindung und die Trennung zwischen dem ersten externen Kreislauf (3) und dem zweiten externen Kreislauf zu erlauben.

14. Verfahren zur Fluidverbindung zwischen einem ersten externen Kreislauf (3) und einem zweiten externen Kreislauf einer Fluidleitung (20), vermittels einer Einrichtung (1) zur Fluidverbindung nach einem der Ansprüche 1 bis 12, **dadurch gekennzeichnet, dass** es wenigstens einen Schritt umfasst, der darin besteht, das Hüllen-Verbindungsstück (11) durch Verschiebung und Drehung entlang der und um die Längsachse (X) der Einrichtung (1) zur Fluidverbindung herum in Bezug auf den Fluid-Anschluss (12) des zweiten externen Kreislaufs zu verlagern, um das Verriegeln oder/und das Entriegeln des zweiten Fluidverbinders (12, 4, 5, 6, 7, 8, 11) über das Zusammenwirken zwischen dem ersten (17) und dem zweiten (18) Befestigungsmittel vom Bajonett-Typ sicherzustellen.

15. Verfahren nach Anspruch 14, **dadurch gekennzeichnet, dass** der wenigstens eine Schritt des Verriegelns oder/und Entriegelns, bevorzugt des Verriegelns, des zweiten Fluidverbinders (12, 4, 5, 6, 7, 8, 11) den Schritt des Verriegelns oder/und Entriegelns, bevorzugt des Verriegelns, des ersten Fluidverbinders (9, 10) impliziert.

## Claims

1. Fluid connection device (1) intended to be adapted on a double envelope fluid line (20) to enable connection and disconnection between a first circuit (2a, 3) for circulation of at least one fluid (G1, G2) and a second circuit (2b) for circulation of at least one fluid (G1) of the same fluid line (20),
the first circulation circuit (2a, 3) comprising a first internal circuit (2a) of a process fluid (G1) and a first external circuit (3) forming an envelope extending around the first internal circuit (2a), a surveillance fluid (G2) at least one parameter of which is tested to detect a leak or rupture of the fluid line (20), and the second circulation circuit (2b) comprising at least one second internal circuit (2b) of the process fluid (G1) and a second external circuit of the monitoring fluid (G2),
the fluid connection device (1) comprising a first fluid connector (9, 10) formed by a fluid connection (9) of the second internal circuit (2b) and a fluid connection (10) of the first internal circuit (2a) to enable connection and disconnection between the first internal circuit (2a) and the second internal circuit (2b) of the process fluid (G1),
the device (1) also comprising a second fluid connector (12, 4, 5, 6, 7, 8, 11) to enable connection and disconnection between the first external circuit (3) and the second external circuit of the fluid line (20), comprising:
- a fluid connection (12) from the second external circuit in which the fluid connection (9) of the second internal circuit (2b) is at least partially housed, said fluid connection (12) of the second external circuit comprising at least one first bayonet type attachment means (17), particularly comprising at least one bayonet attachment pin (17), on its external surface (12a),
- a fluid connection (4, 5, 6, 7, 8, 11) of the first external circuit (3) comprising an envelope connection part (11), mounted free to translate and rotate relative to a guide part (7) fixed to the first internal circuit (2a), the envelope connection part (11) at least partially housing the first fluid connector (9, 10) and defining an internal volume (V) for circulation of the monitoring fluid (G2) at the first fluid connector (9, 10), the envelope connection part (11) also comprising at least one second attachment means of the bayonet type (18), particularly at least one bayonet attachment notch (18) fitted with a stop (18a), on its external surface (11a) designed to cooperate with the first bayonet type attachment means (17) of the fluid connection (12) of the second external circuit, particularly by sliding of said at least one bayonet attachment pin (17) in said at least one bayonet attachment notch (18) and locking at the stop (18a), to enable connection and disconnection by a bayonet type attachment between the first external circuit (3) and the second external circuit of the fluid line (20),
**characterised in that** the fluid connection (4, 5, 6, 7, 8, 11) of the first external circuit (3) also comprises an interface part (4) that will be fixed to the first external circuit (3) of the first circulation circuit (2a, 3), the interface part (4) comprising an internal space (4a) to enable insertion of the guide part (7), the guide part (7) being designed to at least partly extend inside the first external circuit (3) and itself comprising an internal space (7a) for passage of the first internal circuit (2a) of the first circulation circuit (2a, 3).

2. Device according to claim 1, **characterised in that** the interface part (4) comprises at least one orifice (4b) for circulation of the monitoring fluid (G2).

3. Device according to claim 1 or 2, **characterised in that** the fluid connection (4, 5, 6, 7, 8, 11) of the first fluid circulation circuit (2a, 3) also comprises a compressible part (6), particularly a part forming bellows (6) fixed in a sealed manner to the interface part (4) and to the envelope connection part (11) so as to extend around parts of the interface part (4), the guide part (7) and the envelope connection part (11), the compressible part (6) comprising an internal space (6a) for circulation of the monitoring fluid (G2).

4. Device according to claim 3, **characterised in that** the compressible part (6) is configured so that it can be compressed and stretched along and about the longitudinal axis (X) of the fluid connection device (1) to enable a translation and rotation movement of the envelope connection part (11) so as to make the connection and disconnection by a bayonet type attachment between the first external circuit (3) and the second external circuit of the fluid line (20).

5. Device according to claim 3 or 4, **characterised in that** the fluid connection (4, 5, 6, 7, 8, 11) of the first external circuit (3) also comprises a first adapter part (5), particularly a first adapter ring (5) located around a part of the interface part (4) and capable of hermetically holding the compressible part (6) in place on the interface part (4).

6. Device according to one of claims 3 to 5, **characterised in that** the fluid connection (4, 5, 6, 7, 8, 11) of the first external circuit (3) also comprises a second adapter part (8), particularly a second adapter ring (8) located around a part of the envelope connection part (11) and capable of hermetically holding the compressible part (6) in place on the envelope connection part (11).

7. Device according to any one of claims 3 to 6, **characterised in that** the envelope connection part (11) comprises at least one orifice (11b) for circulation of the monitoring fluid (G2).

8. Device according to any one of the previous claims, **characterised in that** the fluid connection (4, 5, 6, 7, 8, 11) of the first external circuit (3) also comprises at least one elastic return element (15), particularly a spring (15), located around the guide part (7) at the envelope connection part (11) and configured to apply an elastic return in translation of the envelope connection part (11) to lock it during its connection by a bayonet type attachment between the first circulation circuit (2a, 3) and the second circulation circuit (2b) of the fluid line (20).

9. Device according to any one of the previous claims, **characterised in that** it also comprises at least one first seal (13) placed around the fluid connection (12) of the second external circuit to make the seal between said fluid connection (12) and the envelope connection part (11).

10. Device according to any one of the previous claims, **characterised in that** the fluid connection (12) of the second external circuit comprises, particularly at its end opposite the fluid connection (10) of the first internal circuit (2a), sealed means (14, 16) of connection to a target device that will be supplied by process fluid (G1), particularly at least one second seal (14) and a lock nut (16).

11. Device according to any one of the previous claims, **characterised in that** the attachment system of the first fluid connection (9, 10) and the bayonet type attachment system of the second fluid connector (12, 4, 5, 6, 7, 8, 11) are independent of each other.

12. Device according to any one of the previous claims, **characterised in that** it comprises a foolproofing system at the bayonet type attachment of the second fluid connector (12, 4, 5, 6, 7, 8, 11).

13. Double envelope fluid line (20) for the circulation of at least one fluid (G1, G2) comprising:
- a first circuit (2a, 3) for circulation of at least one fluid (G1, G2), the first circulation circuit (2a, 3) comprising a first internal circuit (2a) of a process fluid (G1) and a first external circuit (3) forming an envelope extending around the first internal circuit (2a), a surveillance fluid (G2) at least one parameter of which is tested to detect a risk of rupture of the fluid line (20),
- a second circulation circuit (2b) for a least one fluid (G1), the second circulation circuit (2b) comprising at least one second internal circuit (2b) of the process fluid (G1) and a second external circuit of the monitoring fluid (G2), **characterised in that** it is fitted with a fluid connection device (1) according to any one of the previous claims, for connection and disconnection between the first external circuit (3) and the second external circuit.

14. Method of fluid connection between a first external circuit (3) and a second external circuit of a fluid line (20) by means of a fluid connection device according to any one of claims 1 to 12 **characterised in that** it comprises at least one step consisting of displacing the envelope connection part (11) in translation and in rotation, along and about the longitudinal axis (X) of the fluid connection device (1) relative to the fluid connector (12) of the second external circuit so as to lock and/or unlock the second fluid connector (12, 4, 5, 6, 7, 8, 11) by means of cooperation between the first (17) and the second (18) bayonet type attachment means.

15. Method according to claim 14, **characterised in that** said at least one step to lock and/or unlock, preferably to lock, the second fluid connector (12, 4, 5, 6, 7, 8, 11) implies the step to lock and/or unlock, preferably to lock, the first fluid connector (9, 10).
